Europäisches Patentamt

European Patent Office

Office européen des brevets

(19)

(11) Numéro de publication: **0 015 844**
**B1**

## FASCICULE DE BREVET EUROPEEN

(12)

(45) Date de publication du fascicule du brevet: **24.10.84**

(21) Numéro de dépôt: **80400295.4**

(22) Date de dépôt: **04.03.80**

(51) Int. Cl.³: **G 01 S 5/02,** G 01 S 7/04,
G 01 S 13/38

(54) Procédé et dispositif permettant de faire automatiquement le point à bord d'un véhicule pourvu d'un équipement radar.

(30) Priorité: **08.03.79 FR 7905989**

(43) Date de publication de la demande:
**17.09.80 Bulletin 80/19**

(45) Mention de la délivrance du brevet:
**24.10.84 Bulletin 84/43**

(84) Etats contractants désignés:
**AT BE CH DE GB IT LU NL SE**

(56) Documents cités:
**FR-A-2 393 361**
**GB-A-2 025 185**
**GB-A-2 025 722**
**GB-A-2 025 723**
**US-A-2 814 199**
**US-A-3 307 177**
**US-A-4 081 802**

(73) Titulaire: **Virnot, Alain Dominique**
**21 rue des Canettes**
**F-75006 Paris (FR)**

(72) Inventeur: **Virnot, Alain Dominique**
**21 rue des Canettes**
**F-75006 Paris (FR)**

(74) Mandataire: **Bonnetat, Christian**
**Cabinet PROPI Conseils 23 rue de Léningrad**
**F-75008 Paris (FR)**

Courier Press, Leamington Spa, England.

# 0 015 844

**Description**

La présente invention concerne un procédé et un dispositif permettant à un véhicule, par exemple un navire, de faire automatiquement le point en utilisant les informations fournies par son radar.

Elle s'applique tout particulièrement, quoique non exclusivement à la navigation fluviale ou à la navigation maritime au voisinage des côtes.

On connait déjà, par le document FR—A—2393 361 un dispositif de navigation pour véhicule, comportant un dispositif d'échantillonnage de terrain destiné à déterminer à des intervalles de temps espacés l'élévation du terrain au-dessous du véhicule et à produire des échantillons de données d'élévation du terrain, un dispositif de guidage par repérage de position à l'avance destiné à produire des signaux de position et de vitesse du véhicule, un dispositif de mémorisation de données qui contient des données concernant le terrain mémorisées préalablement, un processeur de calcul réagissant aux échantillons d'élévation du terrain, aux signaux de position et de vitesse du véhicule et aux données mémorisées préalablement en produisant des signaux d'échantillon discrets de correction de vitesse et de correction de position du véhicule, et un dispositif de commande de navigation commandé par les signaux d'échantillon provenant dudit processeur de manière à produire des signaux de navigation du véhicule.

Le dispositif de navigation décrite dans ce document antérieur est plus particulièrement destiné à la navigation de véhicules aériens.

En revanche, l'objet de la présente invention concerne plus particulièrement les navires et a pour objet un procédé et un dispositif de localisation précis et sûr mettant en oeuvre le propre radar de navigation dudit navire.

On remarquera que le document USU—A—4 081 802 décrit un système de navigation, notamment pour navires, permettant d'afficher continuellement sur un tube cathodique les informations radar usuelles et la carte de navigation à l'aide d'un balayage circulaire horizontal ainsi corrnu en soi.

Selon l'invention, le procédé permettant de faire le point automatiquement à bord d'un véhicule, en utilisant des informations fournies par l'équipement radar dudit véhicule, selon lequel d'une part, au cours d'une phase préparatoire, on enregistre sous forme numérique, dans une mémoire, des informations couvrant les régions où l'on veut pouvoir naviguer et d'autre part, lorsque le véhicule se trouve dans l'une desdites régions, on réalise de façon séquentielle les opérations suivants:

— on effectue, pour la localisation du véhicule estimée d'après des mesures antérieures, des calculs de position dudit véhicule par rapport à certaines destines informations enregistrées;

— on effectue pour la position actuelle réelle du véhicule, des mesures de même nature que les informations enregistrées;

— on compare lesdits calculs et lesdites mesures radar, et,

— de cette comparaison, on déduit une correction pour la localisation exacte actuelle du véhicule, est caractérisé en ce que l'on en oeuvre un radar à balayage circulaire horizontal, en ce que l'on enregistre dans ladite mémoire des informations de situation géographique de quelques repères remarquables par leurs échos radar, en ce que, à partir d'une part, des informations contenues dans ladite mémoire et d'autre part de la position estimée du véhicule, on calcule la distance et la position angulaire théoriques d'au moins certains des repères actuellement valides par rapport à ladite antenne radar et au fur et à mesure que l'antenne radar tourne autour de son axe, on recherche des échos correspondants dans des fenêtres d'observation angulaires délimitées à chaque fois par deux rayons symétriques par rapport au rayon correspondant à la position angulaire théorique calculée et en ce que l'écart angulaire entre les deux rayons symétriques et la dimension radiale des fenêtres d'observation sont choisis de façon qu'on attribuerait un poids de vraisemblance pratiquement nul à un écho qui proviendrait des limites des fenêtres ainsi déterminées.

Grâce à l'invention, on parvient à n'utiliser que des moyens électroniques limiteśs du fait que:

1. — La carte préenregistrée de façon numérique dans une mémoire ne décrit pas une continuité d'informations réparties sur la surface explorée, consistant pour chaque point de cette surface, en une mesure de l'intensité d'écho, selon une échelle de gris allant du blanc au noire, mais au contraire ne contient que des repères discrets, peu nombreux, de préférence sans étendue de surface, choisis pour ce qui les distingue de façon caractéristique de ce que les entoure.

2. — On ne traite qu'une faible fraction des signaux reçus par le radar, à savoir ceux concernant le voisinage des repères enregistrés dans la carte numérique. Connaissant à peu près par extrapolation la position du véhicule (longitude X, latitude Y), ainsi que son cap $\alpha$, on calcule les coordonnées polaires théoriques par rapport au véhicule du prochain repère qui sera vu par l'antenne radar tournante. Par ailleurs, on enregistre dans un dispositif décrit par la suite, les signaux réellement reçus en provenance d'une fenêtre d'exploration radar englobant l'endroit où l'on croit trouver ledit prochain repère. Les écarts entre la position des échos effectivement reçus et la position du centre de la fenêtre d'exploration constituent l'information, qui après traitement, donnera la correction à apporter aux valeurs estimées X, Y et $\alpha$.

2

3. — Chaque écho dépassant un certain seuile sera interprété comme une hypothèse sur la position du repère. On en déduira que la carte enregistrée devrait, au voisinage de ce repère, être translatée d'un certain vecteur. Cependant, on attribuera à cette information, qui peut être douteuse, un poids calculé en fonction de sa vraisemblance.

L'extrapolation, en l'absence de mesures nouvelles, des informations de point antérieurement connues, ainsi que la correction des valeurs estimées à la réception de mesures nouvelles peuvent être obtenues par une méthode connue. De préférence, on choisit une méthode du type de celle de KALMAN ou du type SRIF (Square Root Information Filter), fondée sur la modification d'un vecteur d'état faisant intervenir les coordonnées cartésiennes X et Y du véhicule, l'attitude $\alpha$ de celui-ci, ainsi que les vitesses X, Y et $\alpha$ correspondantes. Comme on le verra par la suite, le procédé selon l'invention ajoute à une telle méthode un filtrage de vraisemblance des mesures nouvelles.

Ces méthodes connues sont basées sur le fait qu'à tout instant, l'ensemble des connaissances que l'on garde et dont on dispose sur la position X, Y, l'attitude ou cap $\alpha$ et les vitesses $\dot{X}$, $\dot{Y}$ et $\dot{\alpha}$ se résume au vecteur d'état

$$x = \begin{bmatrix} X \\ Y \\ \alpha \\ \dot{X} \\ \dot{Y} \\ \dot{\alpha} \end{bmatrix} \quad \text{et à une matrice.}$$

Une telle matrice peut être la matrice $A_k$ des covariances, l'inverse de la matrice $A_k$ (appelée généralement "information matrix"), une "racine carrée" triangulaire d'une des ces deux matrices, ou bien encore une quelconque matrice se déduisant de la matrice $A_k$ des covariances par une transformation matricielle. Ces diverses méthodes varient selon la matrice adoptée, mais la fonction de la matrice reste toujours de représenter les erreurs probables sur la connaissance du vecteur d'état x.

Selon ces méthodes connues, entre deux instants consécutifs $t_k$ et $t_{k+1}$ séparés d'une unité de temps, on déduit le vecteur d'état $x_{k+1}$ du vecteur d'état $x_k$ en multipliant ce dernier par une matrice de sorte que

$$x_{k+1} = P x_k$$

$$\text{avec } P = \begin{bmatrix} 1 & 0 & 0 & 1 & 0 & 0 \\ 0 & 1 & 0 & 0 & 1 & 0 \\ 0 & 0 & 1 & 0 & 0 & 1 \\ 0 & 0 & 0 & 1 & 0 & \dot{Y} \\ 0 & 0 & 0 & 0 & 1 & -\dot{X} \\ 0 & 0 & 0 & 0 & 0 & 1 \end{bmatrix}$$

et on extrapole la matrice $A_{k+1}$ de la matrice $A_k$ par

$$A_{k+1} = P A_k P^T + B,$$

expression dans laquelle $P^T$ est la matrice transposée de P et dans laquelle B est une matrice constante.

Une telle mise à jour des coordonnées X, Y et $\alpha$ du véhicule peut être réalisée systématiquement, par exemple chaque

$$\frac{\text{Ième}}{16}$$

de tour d'antenne du radar. Si, comme cela est courant, l'antenne de radar effectue un tour complet en 2,5 s, cette mise à jour a donc lieu périodiquement environ toutes les 0,15 s.

A la réception d'une mesure, on corriage, améliore ou précise les connaissances de point ainsi extrapolées et estimées.

L'une des idées de base de la présente invention est de se référer à un instant donné, à un très petit nombre de repères, de façon que les cartes soient les plus coincises et les plus économiques possible à élaborer et que le volume des calculs soit réduit. En contrepartie, il est nécessaire d'utiliser une méthode de traitement très sophistiquée pour tirer le meilleur partie de ce peu de repères.

Une première sorte, préférée, de repères à prendre en compte est l'écho intense isolé, dont le type le plus pur est le réflecteur radar (passif); de tels repères peuvent également être constitués par des poteaux, des cheminées d'usine, etc... Les éléments de contacts, définis par les cordonnées d'un point et par l'angle d'orientation de la côte ou de la rive en ce point, peuvent également être utilisés comme repères. On peut également s'intéresser à des repères constituant des fins de lignes nettes, tels que des extrémités de falaises ou analogues. Toutes ces sortes de repères ont en commun d'être discrets, c'est-à-dire de ne couvrir qu'une faible surface. Ils ne peuvent donc être utilisés pour orienter l'image radar actuelle, mais seulement pour indiquer des translation à effectuer.

On notera, comme on le verra par la suite, qu'un repère de première sorte fournit deux mesures $\Delta r$ et $\Delta\theta$ ($\Delta r$ et $\Delta\theta$ étant les écarts sur la distance r et sur l'argument $\theta$ du véhicule par rapport au repère) alors qu'un repère de seconde sorte n'en fournit qu'une. A chaque mesure correspond une relation linaire entre $\Delta X$, $\Delta Y$ et $\Delta\alpha$, qui sont respectivement les erreurs sur X, Y et $\alpha$ susceptibles d'engendrer les écarts mesurés. On fera en sorte d'enregistrer dans la carte ou liste des repères radar suffisamment de repère pour qu'en tout point de son trajet le bateau reçoive au moins quatre relations entre $\Delta X$, $\Delta Y$ et $\Delta\alpha$.

Dans un exemple caractéristique destiné à la navigation fluviale, on peut utiliser un radar de portée supérieure ou égale à 3 km. On peut retenir en moyenne un repère tous les 1 à 1,5 km, de préférence éloigné du chenal vers l'intérieur des terres, d'au moins 1 km, afin que l'erreur latérale soit surtout mesurée par une distance. On peut avoir une liste distincte pour chaque sorte de repères, par exemple une liste d'échos ponctuels intenses isolés, une liste d'éléments de contact, etc...

Les figures du dessin annexé feront bien comprendre comment l'invention peut être réalisée.

La figure 1 est un schéma permettant d'illustrer l'invention.

La figure 2 est le schéma synoptique d'un dispositif selon l'invention.

La figure 3 illustre la réalisation de la carte des repères.

La figure 4 illustre la mise à jour de la carte des repères.

La figure 5 schématise une mesure relative à un repère radar.

La figure 6 donne le schéma synoptique du dispositif d'interface entre le calculateur du dispositif selon l'invention et l'équipement radar.

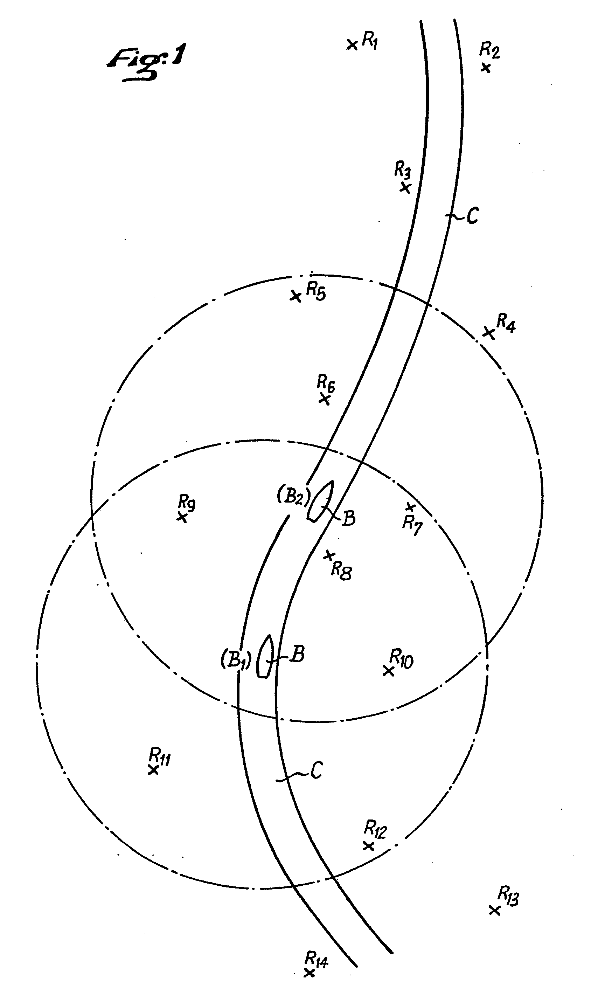

Le procédé selon l'invention sera expliqué ci-après à l'aide de l'exemple illustré par la figure 1.

Sur cette figure, on a représenté un bateau B pourvu d'un équipement radar et devant suivre un chenal C formé par exemple par une route maritime ou une rivière. Le long du chenal C sont répartis une pluralité de repères radar $R_i$, dont ceux qui sont visibles sur la partie de chenal C de la figure 1 portent les références $R_1$ à $R_{14}$.

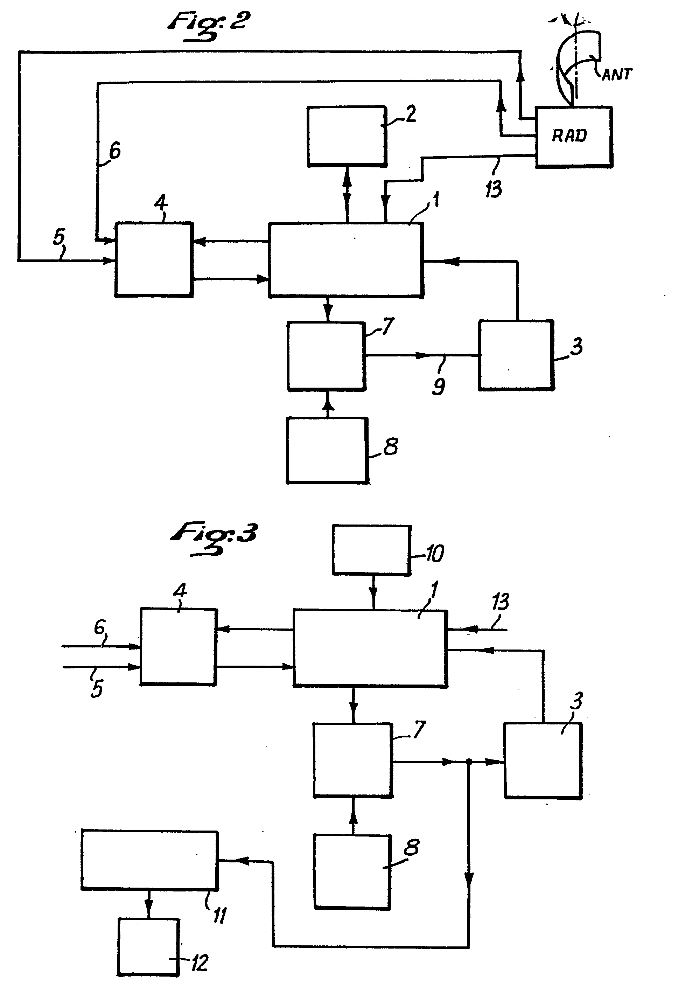

Sur le bateau B est monté un dispositif de traitement de l'information selon l'invention. Ce dispositif est associé à l'équipement radar RAD précité pourvu de son antenne tournante ANT, et est représenté de façon schématique sur la figure 2.

Il comporte principalement un calculateur de comparaison 1, qui est en communication avec une mémoire 2 contenant des informations sur les repères radar $R_i$ et un dispositif d'estime 3 fournissant des valeurs estimées de la position actuelle du bateau B. Par ailleurs, le calculateur de comparaison 1 peut dialoguer avec un dispositif d'interface 4, ou piège à échos, recevant en 5 les impulsions radar émises et en 6 les échos correspondants. Les signaux provenant de l'interface 4 permettent au calculateur 1 de déterminer les coefficients des relations linéaires qui doivent lier les erreurs de position et d'attitude $\Delta X$, $\Delta Y$ et $\Delta\alpha$ pour qu'elles soient compatibles avec les écarts entre les positions réelles des échos et les positions où selon la carte et les informations antérieures de point, ces échos étaient attendus. Ces coefficients sont transmis à un dispositif de correction du point 7, qui par ailleurs reçoit les informations d'un gyromètre 8. Grâce à une liaison 9, les informations à la sortie du dispositif de correction du point 7 peuvent corriger les valeurs estimées de position du bateau B, fournies par le dispositif d'estime 3. De plus, par une liaison 13, le calculateur 1 connaît à chaque instant l'angle de gisement de l'antenne ANT. Comme il a été mentionné ci-dessus, le dispositif d'estime 3 peut être constitué par un appareil du type de KALMAN ou SRIF susceptible de fournir le vecteur d'état et la matrice des covariances (ou une matrice dérivée de celle-ci). La vitesse $\alpha$ de modification du cap $\alpha$ est donnée par le gyromètre 8.

Selon l'invention, avant que le trajet du bateau B le long du chenal soit effectué pour la première fois, on confectionne une carte informatique des repères radar $R_i$ emagasinée dans la mémoire 2. Pour cela, à l'aide d'une carte à grande échelle de la zone considérée (carte marine ou carte d'état-major), on commence par dresser un premier projet de carte comprenant de 2, 3 ou 4 fois plus de repères qu'il n'en sera conservé. Ce projet est constitué d'autant de listes que de sortes de repères. Chaque liste donne les coordonnées des repères successifs ainsi que (s'il y a lieu), leurs autres caractéristiques, telles

4

**0 015 844**

que l'angle $\beta$ d'orientation de la tangente en ce point à la côte. Les différentes listes et leurs informations sont emmagasinées dans une mémoire 10 de type usuel.

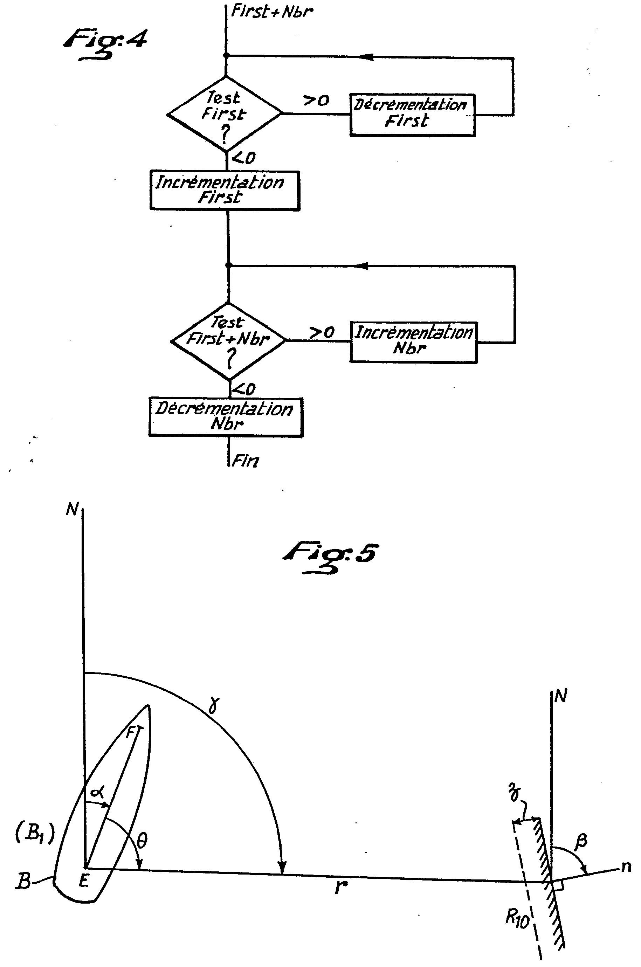

Ensuite, après réalisation de ce projet de carte de repères radar, on effectue un parcours du chenal C avec le bateau B et on expérimente ce projet le long du parcours au moyen d'un dispositif semblable à celui de la figure 2. Ce dispositif d'expérimentation, montré par la figure 3, est semblable à celui de la figure 2, mais il est relié à la mémoire 10 du projet de carte de repères, au lieu d'être relié à la mémoire 2 de carte définitive comme lors d'un parcours de routine. Il calcule ou plutôt retient les corrections demandées par chaque repère et enregistre à intervalles réguliers, par exemple chaque minute ou chaque 50 m, les moyennes de corrections de chaque repère. On lui ajoute pour cela un enregistreur 11, sur un moyen d'enregistrement 13, qui peut être par exemple soit une cassette à bande magnétique, soit un ruban perforé. On traite ensuite à terre ces enregistrements 12, de préférence à l'aide d'un calculateur:

— on élimine les repères les moins bons ou les moins sûrs, ceux qui ne sont pas vus correctement sur une assez grande longueur du trajet; ceux qui semblent inconstants, etc. . . .
— on corrige et précise les coordonnées de chaque repère de sorte qu'ils ne demandent plus, en moyenne, les corrections—ou la partie constante—des corrections qu'ils demandaient.

Enfin, on enregistre une mémoire normale qui peut être de tout type usuel en électronique ou en informatique et on essaie le nouveau projet de carte qui en découle.

Ce processus d'établissement et de mise au point de la carte des repères peut être réitéré ou ne pas l'être, jusqu'à l'obtention d'une carte satisfaisante.

Ainsi, on obtient une mémoire 2 contenant les caractéristiques des différents repères $R_i$ retenus et répartis en listes regroupant des repères de même catégorie. On possède donc en mémoire une liste d'échos ponctuels intenses isolés, une liste d'éléments de contact, etc. . . . de sortie que l'ensemble de ces listes constitue donc une véritable carte desdits repères.

Chaque liste définit les repères $R_i$ en attribuant à chacun d'eux un même nombre de chiffres binaires. La liste des échos ponctuels intenses isolés est par exemple une suite de groupes de 4 mots de 8 chiffres, chaque groupe étant associé à un repère. Ainsi, chaque coordonnée $X_R$ et $Y_R$ d'un repère est définie par 2 mots, c'est-à-dire par 16 chiffres binaires. Pour la liste des éléments de contact, un cinquième mot est par exemple chargé de définir à 180° près, l'orientation du repère au point $X_R$, $Y_R$. Le nom de chaque repère, ou numéro d'ordre, est l'adresse en mémoire du premier mot de sa définition, divisée par le nombre de mots. Par exemple, dans la première liste mentionnée, chaque adresse divisible par 4, de la forme 4n, est celle du premier mot de la définition du repère n; l'adresse 4n+1 est celle du deuxième mot, etc. . . .

De préférence, à un moment donné du parcours du bateau B, plutôt que d'utiliser la totalité de la mémoire 2 contenant tous les repères $R_i$, on utilise seulement une partie de cette mémoire ne contenant que les repères $R_i$ valides à ce moment, en fonction de la position du bateau B et de la portée de son radar. Bien entendu, le contenu de cette partie de mémoire est constamment remis à jour, en fonction de l'avance du bateau B, par l'intermédiaire du calculateur 1.

Une telle mesure est destinée à faciliter le traitement repères et est dictée par ce qui se passe en réalité lorsque le bateau B effectue son parcours C. Comme le montre la figure 1, à cause de la portée limitée de son radar, schématisée sur cette figure par des cercles en tirets mixtes, dans la position $B_1$ du bateau B, l'équipement radar de bord ne peut coopérer qu'avec les repères $R_7$ à $R_{12}$, alors qu'en position $B_2$, les prepères $R_5$ et $R_6$ se sont ajoutés aux repères déjà utilisables antérieurement, alors que les repères $R_{11}$ et $R_{12}$ en ont été retranchés.

A cet effet, la liste des repères valides à un instant donné est définie par deux nombres référencés par exemple par "First" et "Nbr":

— "First" est le numéro d'ordre (ou adress) du repère valide dont l'adresse est la plus basse
— "Nbr" est égal au nombre des repères valides moins 1.

Ainsi, dan la première position ($B_1$) du bateau représentée sur la figure 1, "First" est égal à 7 et "Nbr" à 6−1=5, alors que dans la seconde position ($B_2$), "First" est égal à 5 et "Nbr" à 6−1=5.

Chaque repère valide est affecté d'un indice $\leqslant$Nbr, tel que "First"+indice=numéro d'ordre sur la carte des repères. Ainsi, le repère $R_9$, en position $B_1$, reçoit l'indice 2 (car 7+2=9) et, en position $B_2$, l'indice 4 (car 5+4=9).

La mise à jour de la liste des repères s'effectue suivant le schéma logique de la figure 4. Elle est effectuée quand le processus 17 du calculateur 1 trouve le temps disponible: c'est une de ses dernières priorités.

Cette mise à jour consiste en l'actualisation des extrémités de la liste.

On vérifie que "First" est bon, c'est-à-dire à portée due radar. En position $B_1$, 7 est bon. On essaie "First"−1=6, ce qui n'est pas bon dans l'exemple choisi.

Si 6 avait été trouvé bon, on aurait adopté "First"=6.

Si 7 avait été trouvé mauvais, on aurait adopté "First"=8.

5

Puis, on effectue la même procédure pour le repère "First+Nbr" c'est-à-dire 12.

On vérifie 12 et, dans le cas présent, 12 est bon. On essaie alors 13. Si 13 était bon, on prendrait Nbr=6. Si 12 avait été mauvais, on aurait pris "Nbr"=4.

Ainsi, à tout instant, le bateau B connaît la liste des repères radar valides $R_i$ qu'il peut utiliser et les coordonnées et caractéristiques de ceux-ci (fournies par la mémoire 2) sa position approximative (fournie par le dispositif d'estime 3) et sa vitesse de changement de cap $\alpha$ fournie par le gyromètre 8. Le dispositif de la figure 2 peut donc, en combinaison avec le radar, commencer à déterminer la position exacte du bateau B, selon la méthode de l'invention, qui repose sur le fait que lors de la rotation de l'antenne radar on s'attend, à cause du contenu de la mémoire 2, à trouver tel repère à telle distance dans une fenêtre de lecture angulaire centrée sur un relèvement donné.

Le principe de base simplifié de la méthode selon l'invention est expliqué à l'aide des figures 1 et 5. On suppose que l'antenne radar ANT est installée à l'arrière du bateau B en un point E, mais que, en réalité, le point dont on veut déterminer la position avec exactitude n'est pas E, mais un point F à l'avant du bateau B, sur l'axe longitudinal de celui-ci, à une distance $a$ de E. On pourrait confondre E et F, lorsque la navigation ne requiert que peu de précision; mais, le long de chenaux étroits par rapport aux dimensions du bateau B, on améliore grandement les performances du dispositif selon l'invention en faisant la distinction entre les points E et F, le point F étant avantageusement le centre de giration du bateau.

L'antenne radar ANT tourne autour du point E pour balayer 360° autour du bateau B et, sur la figure 5, on suppose qu'à l'instant considéré le bateau est dans sa position $B_1$ et le radar est en train d'interroger le repère $R_{10}$. On connaît les coordonnées $X_R$ et $Y_R$ du point $R_{10}$ grâce à la mémoire 2 et celles, X et Y du point F ainsi que $\alpha$ grâce au dispositif d'estime 3; on en déduit la distance théorique $r=ER_{10}$ et l'argument $\theta$ correspondant. Or, lorsqu'on effectue la mesure à l'aide du radar, on trouve des écarts $\Delta r$ et $\Delta \theta$. Si, comme représenté sur la figure 5, on suppose que le repère $R_{10}$ est un élément de contact on peut calculer la grandeur

$$z=\cos(\gamma-\beta)\Delta r-\sin(\gamma-\beta)\Delta\theta$$

dans laquelle $\gamma$ est le relèvement du repère $R_{10}$, $\alpha$ est l'angle entre la direction du nord N avec l'axe longitudinal du bateau B et $\beta$ l'angle entre la direction du nord N avec la normale à la surface du repère $R_{10}$. Cette grandeur z correspond au décalage dans la fenêtre d'observation de la ligne d'échos réelle par rapport à la ligne d'échos enregistrée.

Sous forme matricielle, la grandeur peut s'écrire

$$z=\begin{bmatrix} \cos(\gamma-\beta) \\ -\sin(\gamma-\beta) \end{bmatrix}^T \begin{bmatrix} \Delta r \\ \Delta\theta \end{bmatrix}$$

Or, la relation entre $\Delta r$, $\Delta \theta$ et $\Delta X$, $\Delta Y$ et $\Delta \alpha$ peut s'écrire

$$\begin{bmatrix} \Delta r \\ \Delta\theta \end{bmatrix}=G \begin{bmatrix} \Delta X \\ \Delta Y \\ \Delta\alpha \end{bmatrix}$$

$$\text{avec } G=\begin{bmatrix} \sin\gamma & \cos\gamma & a\sin(\gamma-\alpha) \\ \cos\gamma & -\sin\gamma & r-a\cos(\gamma-\alpha) \end{bmatrix}$$

Il en résulte que

$$z=\begin{vmatrix} \cos(\gamma-\beta) \\ -\sin(\gamma-\beta) \end{vmatrix}^T_G \begin{bmatrix} \Delta X \\ \Delta Y \\ \Delta\alpha \end{bmatrix}$$

qui peut s'écrite

$$z=l\begin{bmatrix} \Delta X \\ \Delta Y \\ \Delta\alpha \end{bmatrix}$$

A chaque nouvelle mesure correspond donc ainsi un vecteur l, dont les composantes sont calculées par le calculateur 1.

Dans le cas où le réflecteur $R_{10}$ serait un réflecteur ponctuel isolé, il lui correspondrait deux

## 0 015 844

vecteurs par mesure, que l'on pourrait déduire du vecteur I, soit en faisant $\beta=0$ puis

$$\beta=\frac{\pi}{2}, \text{ soit } \beta=\gamma \text{ puis } \beta=\gamma+\frac{\pi}{2}.$$

Ensuite, les méthodes de KALMAN, SRIF, ou analogues permettent au calculateur 1 de calculer de nouvelles valuers du vecteur d'état et de la matrice associée.

Lorsque les informations provenant du repère $R_{10}$ ont été traitées de la façon décrite ci-après, le calculateur fait un choix du prochain repère à capter et à régler, en tenant compte du sens de rotation de l'antenne radar. Le repère $R_{10}$ correspond à l'indice 3 (voir ci-dessus) et le calculateur 1 calcule, pour tous les indices différents de 3, le relèvement correspondant. Dans l'exemple de la figure 1, on obtient le tableau suivant:

| Indice | 0 (R$_7$) | 1 (R$_8$) | 2 (R$_9$) | 3 (R$_{10}$) | 4 (R$_{11}$) | 5 (R$_{12}$) |
|---|---|---|---|---|---|---|
| $\gamma$ | 115 | 110 | 055 | | 320 | 245 |

Des valeurs de relèvements ainsi obtenus, on retranche modulo 360° la somme s du relèvement actuel du rayon balayé par l'antenne, de la demi-largeur angulaire de la fenêtre de lecture de l'antenne et d'une marge de sécurité. Dans l'exemple représenté, cette somme peut être de l'ordre de 190°. Par suite, on obtient le tableau suivant:

| Indice | 0 (R$_7$) | 1 (R$_8$) | 2 (R$_9$) | 3 (R$_{10}$) | 4 (R$_{11}$) | 5 (R$_{12}$) |
|---|---|---|---|---|---|---|
| $\gamma-s$ | 285 | 280 | 225 | | 130 | 055 |

On choisit alors le repère, dont la différence $\gamma-s$ est la plus faible, c'est-à-dire le repère $R_{12}$, dans le présent exemple. La valeur 055 est portée dans un décompteur (non représenté) qui, quand il arrivera à zéro, déclenchera la préparation à la réception des échos du repère $R_{10}$.

Selon une variante du procédé du choix du repère suivant à recevoir, on peut traiter alternativement deux repères (tels $R_7$ et $R_8$ en position $B_1$) alignés avec l'antenne ou du moins dont les fenêtres angulaires de lecture de l'antenne se chevauchent. Cela permet de conserver la simplicité de ne traiter qu'un repère à la fois, et pourtant de garder (à peu près) les avantages de deux repères (ou plus).

On dote pour cela chaque repère valide d'un indice supplémentaire baptisé "saute". Cet indice, ordinairement=0, peut prendre les valeurs 1, 2 ou 3, égales au nombre de tours d'antenne (à venir) où ce repère devra être sauté pour pouvoir traiter un autre repère de plus grande priorité.

Ainsi, en position $B_1$, on voit que $R_7$ et $R_8$ sont presque alignés. Un peu avant, lorsque le bateau B était plus en arrière, leurs fenêtres de lecture n'empiétaient pas l'une sur l'autre, de sorte que

Saute ($R_4$)=0 et Saute ($R_8$)=0

qui s'écrivent en réalité

Saute (0)=0 et Saute (1)=0,

car les repères sont notés par leurs indices.

Après avoir traité le repère d'indice 1, on calcule comme auparavant les relèvements $\gamma$ de tous les repères, mais cette fois-ci, on note aussi le relèvement $\gamma_1$ du repère $R_1$.

| Indice | 0 (R$_7$) | 1 (R$_8$) | 2 (R$_9$) | 3 (R$_{10}$) | 4 (R$_{11}$) | 5 (R$_{12}$) |
|---|---|---|---|---|---|---|
| $\gamma$ | 115 | 110 | 055 | 185 | 320 | 245 |

On retranche (modulo 360°) 110° qui correspond au relèvement du repère $R_1$.

7

| Indice | 0 (R₇) | 1 (R₈) | 2 (R₉) | 3 (R₁₀) | 4 (R₁₁) | 5 (R₁₂) |
|---|---|---|---|---|---|---|
| $\gamma - \gamma_1$ | 005 | 000 | 305 | 075 | 210 | 135 |

On choisit (provisoirement) le plus petit après le 1. On trouve celui d'indice 0. On compare $\gamma - \gamma_1 = 005$ à la largeur de fenêtre de lecture augmentée d'une marge de préparation à réception. Soit par exemple 11° de cet angle. On voit que $\gamma - \gamma_1$ est trop petit. On ajoute alors 1 à Saute (1), on retranche 1 à Saute (0), si l'on peut (si cet indice est >0, ce qui ici n'est pas le cas), et l'on choisit (provisoirement encore) l'indice suivant dans l'ordre de $\gamma - \gamma_1$ croissant. On trouve ici l'indice=3. On constate que 075>011. On adopte donc le repère $R_{10}$ comme prochain repère.

Comme il a été expliqué ci-dessus, à partir des informations contenues dans la mémoire 2, le calculateur 1 est susceptible de calculer et donc de connaître, à chaque instant, la distance théorique $r_c$ séparant le navire d'un repère valide, ainsi que l'argument théorique $\theta_c$ dudit repère. Le principe de base de l'invention consiste donc, au cours de la rotation de l'antenne du radar, à rechercher si l'on trouve bien un écho correspondant à chaque repère valide successif, pour les différents couples $\theta_c$ et $r_c$, dont chacun d'eux est associé à un repère spécifique. En réalité, pour tenir compte des écarts inévitables entre position théorique et position vraie, pour chaque couple $\theta_c$, $r_c$, on cherche si l'on trouve l'écho que l'on devait trouver dans une "fenêtre" angulaire de largeur 2 $\Delta\theta$, centrée sur $\theta c$, c'est-à-dire comprise entre les rayons $\theta_c - \Delta\theta$ et $\theta c + \Delta\theta$ et à une distance comprise entre $r_c - \Delta r$ et $r_c + \Delta r$. Selon l'invention, on accorde un "poids" différent à l'écho reçu dans la zone délimitée par les axes $\theta c - \Delta\theta$, et par les rayons $r_c - \Delta r$, en fonction de la position dudit écho dans ladite zone. Le "poids" est d'autant plus fort que l'écho se rapproche au plus de la position que devrait occuper ledit écho dans la fenêtre d'observation.

Par exemple, dans le cas d'un élément de contact tel que $R_{10}$, le calculateur 1, après avoir calculé la grandeur z de la façon indiquée ci-dessus, attribue à cette grandeur mesurée un poids p. Pour cela, on fait choix d'une distribution de probabilités de percevoir un écho provenant d'un point de la fenêtre d'observation avec une différence $\Delta r$, $\Delta\theta$. Une telle distribution peut par exemple être choisie comme suivant une loi de GAUSS g(z).

Le poids attribué à la mesure pourrait être pris égal à la valeur correspondante g(z). Cependant, afin de mieux tenir compte des parasites, on fait intervenir le bruit, par la densité des parasites b, qui est la probabilité de recevoir un parasite sur une surface unité. On attribue alors le poids

$$P_i = \frac{g(zi)}{g(zi) + b}$$

à chacune des mesures zi, correspondant à un repère déterminé et effectué pendant le même tour de l'antenne ANT. Le calculateur 1 fait alors la moyenne

$$z_m = E(z) = \frac{\Sigma pi\, zi}{\Sigma pi}$$

ainsi que le moment de second ordre

$$m_2 = E(pz^2) = \frac{\Sigma pi\, zi^2}{\Sigma pi}$$

La variance de cette statistique vaut donc $m_2 - z_m^2$.

Pour affiner encore la valeur du poids à attribuer à une mesure, le calculateur 1 peut ôter à l'inverse de la variance qu'il vient ainsi de calculer l'inverse de la variance que l'on aurait trouvé. Si tous les échos perçus avaient été illusoires et uniformément répartis autour de la position théorique de l'écho. On obtient ainsi un poids

$$\frac{1}{\sigma m^2}.$$

Ensuite, pour normaliser, le calculateur multiple $z_m$ par

$$\frac{1}{\sigma m}.$$

Enfin, le calculateur 1 permet de passer de l'ancien vecteur d'état estimé $\tilde{x}$, doté de la matrice de covariance $\tilde{P}$, au nouveau vecteur d'état estimé $\hat{x}$ tenant compte de cette mesure $z_m$ et doté de la matrice de covariance $\hat{P}$, par une des méthodes connues rappelées ci-dessus.

La largeur 2 $\Delta\theta$ de la fenêtre angulaire d'observation peut être fixée une fois pour toutes. Toutefois, de préférence, pour permettre le choix et l'utilisation de lois de distribution de probabilités variables, ainsi qu'éventuellement, pour tenir compte des différentes répartitions possibles des repères $R_i$ autour du bateau B, il est préférable d'ajuster l'ouverture de la fenêtre d'observation, par exemple à chaque tour d'antenne. Dans ce cas, il est possible d'adopter pour $\Delta\theta$, la plus petite de deux valeurs, dont l'une est une borne superieure fixe, par exemple 10° et dont l'autre est telle que le poids que l'on accorderait à un éventuel écho au bord de la fenêtre aurait une valeur minimale $P_{mini}$ par exemple égale à 0,01.

Par ailleurs, pour mesurer la distance d'un écho éventuel compris entre $rc-\Delta r$ et $rc+\Delta r$, c'est-à-dire provenant d'un intervalle encadrant la distance présumée de l'écho recherché, il est indispensable d'échantillonner le signal sortant du récepteur radar à une fréquence élevée, par exemple entre 20 et 35 MHz, c'est-à-dire au moins cent fois supérieure à celle que pourrait atteindre le processeur d'un calculateur 1, réalisé comme il est usuel en technologie M.O.S.

Pour permettre un tel échantillonnage, on utilise donc le piège à échos 4, réalisé par exemple en technologie bipolaire TTL, beaucoup plus rapide. Le principe de fonctionnement du piège à échos 4 est de faire passer les échos radar à travers un registre à décalage rapide.

Le piège est tendu par le processeur du calculateur, qui charge un compteur d'un nombre fonction de la distance du repère, c'est-à-dire du temps entre l'émission de l'impulsion et le retour attendu de l'écho. Une gâchette est basculée par une impulsion émise par le radar, ce qui entraîne le comptage et le passage du signal à travers le registre à décalage, jusqu'à ce que le compteur atteigne un niveau, qui fait basculer ladite gâchette en sens inverse et figer le contenu du registre.

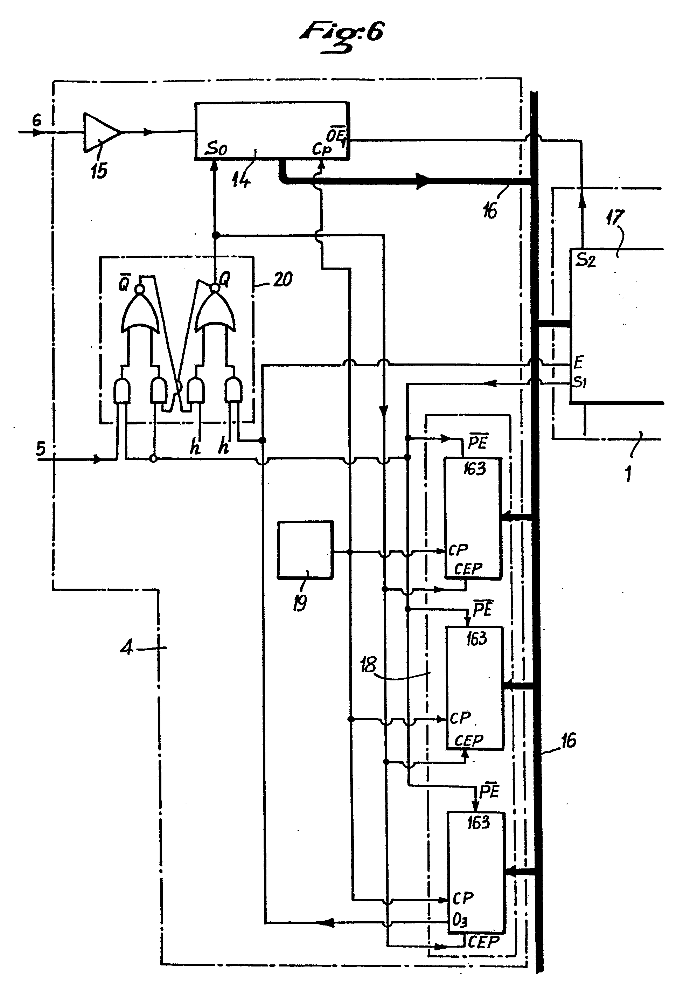

La figure 6 montre un exemple de réalisation du piège à échos 4 selon l'invention. Ce piège à échos comporte un registre à décalage 14, par exemple constitué par un composant 74 LS 299 dont l'entrée forme l'entrée 6 du dispositif reliée à la sortie du récepteur radar RAD. De préférence, afin de digitaliser les impulsions provenant du radar RAD, un comparateur de tension 15 est disposé entre l'entrée 6 et le registre â décalage 14. La sortie de celui-ci est reliée à une ligne-bus de données 16, cette ligne-bus 16 étant également reliée au microprocesseur 17 du calculateur 1 et au compteur 18 du piège 4. Le compteur 18 est par exemple constitué de trois composants 74 LS 163 en cascade. Une horloge 19, reliée aux entrées CP du registre à décalage 14 et du compteur 18 permet de synchroniser ces éléments. La sortie $S_2$ du processeur 17 est reliée à l'entrée $\overline{OE}_1$ du registre à décalage 14, tandis que la sortie $S_1$ dudit processeur est réunie aux entrées $\overline{PE}$ du compteur 18. Par ailleurs, cette sortie $S_1$ est réunie à une entrée d'une gâchette 20, par exemple constituée d'un composant 74 LS51. Une autre entrée de la gâchette 20 est reliée à l'entrée 5 des échos radar, tandis que la sortie Q de cette gâchette est réunie simultanément à l'entrée $S_0$ du registre 14 et aux entrées CEP du compteur 18. La sortie $O_3$ dudit compteur 18 est réunie à la gâchette 20 et à l'entrée E du processeur 17.

Dans un premier temps, le processeur 17 procède à l'armement du piège à échos 4. Pour ce faire, la sortie $S_1$ du processeur 17 est basse, ce qui:

— bascule ou maintient la gâchette 20 dans la position où la sortie Q est basse, d'où
    — l'entrée $S_0$ du registre à décalage 14 est basse et donc ce registre est bloqué;
    — les entrées CEP du compteur 18 sont basses et le compteur est bloqué
— porte à l'état bas les entrées $\overline{PE}$ du compteur 18, ce qui fait que ce compteur emmagasine le contenu de la ligne-bus 16. En revanche, pendant l'armement du piège, la sortie $S_2$ du processeur 17 est haute, ce qui porte à l'état haut l'entrée $\overline{OE}_1$ du registre à décalage et l'isole de la ligne-bus 16.

Le processeur 17 délivre sur la ligne-bus 16 un nombre correspondant au nombre de cycles d'horloge à atteindre entre l'émission d'une impulsion radar et la réception d'un éventuel écho en provenance de l'extrémité $r_c+\Delta r$ de la fenêtre d'exploration.

Un tel nombre est choisi comme étant la partie entière de

$$\frac{2fr_c}{c}+\frac{n}{2}-K$$

dans laquelle
f est la fréquence d'échantillonnage
c la vitesse de la lumière
n le nombre d'échantillons
K une constante de retard déterminée lors des réglages de mise au point du dispositif.

On remarquera, suivant que le compteur 18 est utilisé en décompteur ou en compteur, que le nombre délivré par le processeur 17 peut être soit celui déterminé par la formule ci-dessus, soit le complémentaire de ce nombre à la capacité maximale dudit compteur 18. Dans l'exemple de la figure 6 par exemple, la sortie $O_3$ de ce compteur donne le bit le plus élevé et on introduit donc dans ledit compteur la différence entre la capacité maximale de celui-ci et le nombre défini par la formule précédente.

Dans la phase d'attente de l'émission d'une impulsion radar, le processeur 17 met sa sortie $S_1$ à l'état haut, ce qui:

— porte les entrées $\overline{PE}$ du compteur 18 à l'état haut et isole donc ce compteur de la ligne-bus 16;

— autorise la gâchette 20 à basculer quand l'entrée 5 de celle-ci reçoit une impulsion radar émise.

Ainsi, quand une impulsion radar est émise, la gâchette 20 bascule et sa sortie Q prend l'état haut, ce qui:

— porte à l'état haut l'entrée $S_0$ du registre 14, lequel à chaque cycle de l'horloge 19, translate d'un cran le contenu de ses cellules;

— porte à l'état haut les entrées CEP du compteur 18, ce qui lui permet de compter les cycles de l'horloge 19; il ajoute 1, chacune fois que ses entrées CP reçoivent le signal d'un cycle d'horloge.

Dans un exemple, où $r_c$ est égal à 1300 m et où la fréquence d'échantillonnage est f=25 MHz, on voit que deux échantillons consécutifs sont séparés par 40 ns, ce qui correspond à un intervalle de 6 m entre ces deux échantillons. Si les circuits n'induisent aucun retard additionnel, (K étant égal à C) les échantillons correspondent tous à des distances multiples de 6 m. La distance $r_c$ correspond donc à l'échantillon

$$\frac{1300}{6}=216,7$$

c'est-à-dire à l'échantillon 216.

On prélèvera par exemple 8 échantillons au-dessous, numérotés 209 à 216 et 8 au-dessus, numérotes 217 à 224. Ainsi, si la capacité maximale du compteur 18 est $2^{11}=2048$, le processeur 17 introduit dans celui-ci le nombre 2048−224=1824.

Lorsque le compteur 18 atteint le nombre $2^{11}$, la sortie $O_3$ dudit compteur passe de l'état bas à l'état haut, ce qui:

— bascule la gâchette 20, de sorte que sa sortie Q prend l'état bas et qu'elle met elle-même les entrées $S_0$ et CEP à l'état bas, le registre 14 et le compteur 18 étant donc bloqués;

— porte l'entrée E du processeur 17 à l'état haut, ce qui avertit celui-ci que l'enregistrement est terminé.

Le processeur 17 maintient sa sortie $S_1$ à l'état haut, de sorte que le compteur 18 est maintenu isolé de la ligne-bus 16, mais fait passer sa sortie $S_2$ à l'état bas, ce qui porte à l'état bas l'entrée $\overline{OE}_1$ du registre à décalage et met ce dernier en communication avec la ligne-bus 16, par laquelle le processeur 17 lit ce que contient le registre.

Après cela, le processeur réarme le piège pour la prochaine impulsion radar, si la fenêtre d'observation n'est pas complètement balayée.

Quoique dans la description ci-dessus, on ait laissé entendre que la mémoire 2 était chargée initialement une fois pour toutes, il est bien évident que ce mode de chargement n'est pas limitatif de l'invention. Par exemple, la mémoire 2 peut, à l'approche d'une zone dans laquelle on désire appliquer le procédé selon l'invention, être reliée par l'intermédiaire d'un récepteur radio-électrique, à un émetteur fixe chargé de couvrir ladite zone et susceptible de transmettre dans ladite mémoire la carte de repères correspondant à cette zone.

## Revendications

1. Procédé permettant de faire le point automatiquement à bord d'un véhicule B, en utilisant des informations fournies par l'équipement radar dudit véhicule, selon lequel d'une part, au cours d'une phase préparatoire, on enregistre sous forme numérique, dans une mémoire (2), des informations couvrant les régions où l'on veut pouvoir naviguer et d'autre part, lorsque le véhicule B se trouve dans l'une desdites régions, on réalise de façon séquentielle les opérations suivantes:

— on effectue, pour la localisation du véhicule estimée d'après des mesures antérieures, des calculs de position dudit véhicule par rapport à certaines desdites informations enregistrées;

— on effectue pour la position actuelle réelle du véhicule, des mesures de même nature que les informations enregistrées;

— on compare lesdits calculs et lesdites mesures radar, et,

— de cette comparaison, on déduit une correction pour la localisation exacte actuelle du véhicule B,

caractérisé en ce que l'on met en oeuvre un radar à balayage circulaire horizontal, en ce que l'on enregistre dans ladite mémoire (2) des informations de situation géographique de quelques repères remarquables par leurs échos radar, et en ce que, à partir d'une part, des informations contenues dans ladite mémoire (2) et d'autre part de la position estimée du véhicule, on calcule la distance et la position angulaire théoriques d'au moins certains des repères actuellement valides par rapport à ladite antenne radar (ANT) et au fur et à mesure que l'antenne radar (ANT) tourne autour de son axe, on recherche des échos correspondants dans des fenêtres d'observation angulaires délimitées à chaque fois par deux rayons symétriques par rapport au rayon correspondant à la position angulaire théorique calculée et en ce que l'écart angulaire entre les deux rayons symétriques et la dimension radiale des fenêtres d'observation sont choisis de façon qu'on attribuerait un poids de vraisemblance pratiquement nul à un écho qui proviendrait des limites de fenêtres ainsi déterminées.

2. Procédé selon la revendication 1, caractérisé en ce que, à chaque écho provenant d'une fenêtre, on attribue un poids fonction de la position dudit écho par rapport à la position calculée que ledit écho devrait occuper dans la fenêtre.

3. Procédé selon la revendication 1, caractérisé en ce que la largeur des fenêtres d'observation est modifiée pour tenir compte des positions relatives des repères radar actuellement observables.

4. Dispositif pour la mise en oeuvre du procédé spécifié sous l'une quelconque des revendications 1 à 3, comportant un calculateur (1) est desinté à un véhicule (B) pourvu d'un équipement radar (RAD), caractérisé en ce qu'il comporte une mémoire (2) dans laquelle sont enregistrées sous forme numérique des informations de situation relative de quelques repères radar (R) de façon à former une carte numérique de repères, un dispositif d'estime (3), un gyromètre (8), un dispositif de tenue du point (7) et un dispositif d'interface (4) placé entre l'équipement radar (RAD) et ledit calculateur (1) et destiné à l'échantillonnage des fenêtres d'observations.

5. Dispositif selon la revendication 4, caractérisé en ce que ledit dispositif d'interface (4) comporte un registre à décalage (14) pour les échos radar, une compteur (18) chargé par un nombre représentatif de la distance théorique maximale du repère actuellement observé, un horloge (19) et une gâchette (20) basculée par une impulsion émise par le radar pour entraîner le comptage des signaux de l'horloge (19) et le passage des échos à travers le registre à décalage (14) jusqu'à ce que le compteur (18) atteigne un niveau prédéterminé qui fait basculer la gâchette (20) en sens inverse pour bloquer le contenu du registre (14).

**Patentansprüche**

1. Verfahren zur selbsttätigen Standortbestimmung an Bord eines Fahrzeugs B unter Ausnutzung der von der Radaranlage des Fahrzeugs gelieferten Informationen, nach dem einerseits im Laufe einer Vorbereitungsphase in numerischer Form in einem Speicher (2) Informationen festgehalten werden, die die Regionen des gewünschten Navigationsfeldes abdecken, un andererseits bei Befinden des Fahrzeugs B in einer dieser Regionen folgende Operationen folgegebunden durchgeführt werden:

— Positionsberechnungen des Fahrzeuges in bezug auf bestimmte festegehaltene Informationen zur geschätzten Standortbestimmung des Fahrzeugs nach den vorhergehenden Messungen;

— Messungen deselben Ārt wie die der festgehaltenen Informationen zur Ermittlung der gegenwärtigen Realposition des Fahrzeuges;

— Vergleichen der Berechnungen und der Radarmessungen und

— Abziehen aus diesem Vergleich einer Berichtigung für den genauen gegenwärtigen Standort von Fahrzeug B,

dadurch gekennzeichnet, daß ein horizontal kreisabtastendes Radar eingesetzt wird, daß Informationen der geographischen Lage einiger bedeutsamer—durch Radarecho ermittelter Bezugspunkte in einem Speicher (2) festgehalten werden, daß ausgehend einerseits von den in dem Speicher (2) enthaltenen Informationen und andererseits von der geschätzten Position des Fahrzeuges die Entfernung und die theoretische Winkelstellung von zumindèst bestimmten gültigen Istbezugspunkten in bezug auf die Radarantenne (ANT) gemessen wird, wobei in dem Maße, wie sich die Radarantenne (ANT) um ihre eigene Achse dreht, entsprechende Echos in den winkelig begrenzten Beobachtungsfenstern jedesmal von zwei symmetrischen Strahlen gegenüber dem Strahl ermittelt werden, der der theoretisch berechneten Winkelposition entspricht, und daß der Winkelabstand zwischen den beiden symmetrischen Strahlen und der radialen Dimension der Beobachtungsfenster derart gewählt werden, daß man einem Echo, das aus den Grenzbereichen der auf diese Weise bestimmten Fenster stimmt, ein Wahrscheinlichkeitsmaß von praktisch null zuschreibt.

2. Verfahren nach Anspruch 1, dadurch gekennzeichnet, daß man jedem aus einem Fenster stammenden Echo ein Maß zuschreibt, das Funktion der Position des Echos in bezug auf die berechnete Position ist, die das Echo im Fenster einnehmen müßte.

3. Verfahren nach Anspruch 1, dadurch gekennzeichnet, daß die Breite der Beobachtungsfenster verändert wird, um die Relativpositionen der beobachteten Istbezugspunkte zu berücksichtigen.

4. Vorrichtung zur Durchführung des in den Ansprüchen 1 bis 3 angeführten Verfahrens, bestehend aus einem Rechner (1) und bestimmt für ein Fahrzeug (B), das mit einer Radaranlage (RAD) ausgerüstet ist, gekennzeichnet durch einen Speicher (2), in dem in numerischer Form Informationen der Relativsituation einiger Radarbezugspunkte (R) festgehalten werden, um eine Karte numerischer Bezugspunkte zu bilden, durch eine Bewertungsvorrichtung (3), ein Gyrometer (8), eine Vorrichtung zum Halten des Bezugspunktes (7) und durch eine Schnittstelle (4), die zwischen der Radaranlage (RAD) und dem Rechner (1) liegt und die zum Sampling der Beobachtungsfenster bestimmt ist.

5. Vorrichtung nach Anspruch 4, dadurch gekennzeichnet, daß die Schnittstelle (4) ein Schiftregister (14) für die Radarechos, einen Zähler (18), der beschickt wird mit einer repräsentativen Zahl der theoretischen Maximalentfernung des gegenwärtig beobachteten Bezugspunkts, einen Taktgeber (19) und eine Zuhaltung (20) aufweist, die durch einen Impuls gekippt wird, der vom Radar abgegebn wird, um die Zählung der Signale des Taktgebers (1) und den Durchgang der Echos durch das Schiftregister (14) einzuleiten, bis der Zähler (18) eine vorherbestimmte Höhe erreicht, die die Zuhaltung (20) in umgekehrter Richtung umkippen läßt, um den Inhalt des Registers (14) zu sperren.

## Claims

1. A process for automatically working out the position on board a vehicle B, using information furnished by the radar equipment of said vehicle, wherein, on the one hand, in a preparatory phase, one records in digital form, in a memory (2), information covering the regions where it is desired to navigate and, on the other hand, when the vehicle B is located in one of said regions, one sequentially carries out the following operations:

— for the location of the vehicle estimated from previous measures, calculations of the position thereof with respect to certain of said information recorded are made;

— measurements similar to recorded information are effected for the real present position of the vehicle;

— said calculations and said measurements are compared, and

— from this comparison, a correction for the exact real present location of the vehicle B is deduced,

characterized in that a radar equipment with horizontal circular scanning is used, that in said memory (2) information on geographic situation of a few land marks noteworthy by their radar echos is recorded, that, on the one hand, from information of memory (2) and on the other hand from the estimated location of the vehicle, the theoretical distance and angular location of at least some presently landmarks valid with respect to the radar antenna (ANT) are calculated and as the radar antenna (ANT) turns about its axis, corresponding echos are sought in angular observation gates defined each time by two symmetrical radii with respect to the radius corresponding to the theoretical angular location calculated, and that the angular variation between the two symmetrical radii and the radial size of said observation gates are chosen so that a weight of virtually zero probability would be attributed to an echo which come from the limits of the gates thus determined.

2. The process of Claim 1, characterized in that to each echo coming from a gate, a weight is attributed which is a function of the position of said echo with respect to the calculated position that said echo should occupy in the gate.

3. The process of Claim 1, characterized in that the width of the observation gates is modified to take into account the relative positions of the radar landmarks presently observable.

4. A device for carrying out the process as claimed in one of Claims 1 to 3, comprising a computer (1) and intended for a vehicle (B) provided with radar equipment (RAD), characterized in that it comprises a memory (2) in which is recorded, in digital form, information on relative situation of a few radar landmarks (R) so as to form a digital map of landmarks, an estimating device (3), a gyrometer (8), a device (7) for retaining the position and an interface device (4) placed between the radar equipment (RAD) and said computer (1) and intended for sampling the observation gates.

5. The device of Claim 4, characterised in that said interface device (4) comprises a shift register (14) for the radar echos, a counter (18) loaded by a number representative of the maximum theoretical distance of the present observed landmark, a clock (19) and a gate (20) tilted by a pulse transmitted by the radar to cause the counting of the signals of the clock (19) and the passage of the echos through the shift register (14) until the counter (18) reaches a predetermined level which causes the gate (20) to tilt in the opposite direction to block the contents of the register (14).

Fig:1

Fig. 2

Fig. 3

Fig.4

Fig.5

## Fig.6